# FASCICULE DE BREVET EUROPEEN

(11) **EP 3 936 366 B1**
(45) Date de publication et mention de la délivrance du brevet: **06.08.2025**
(21) Numéro de dépôt: 21180880.3
(22) Date de dépôt: 22.06.2021
(51) Int. Cl.: B60L 1/02, H02J 3/14

(54) **PROCEDE DE REGULATION DE LA TEMPERATURE D'ELEMENTS CHAUFFANTS EMBARQUES DANS UN VEHICULE**
VERFAHREN ZUR REGULIERUNG DER TEMPERATUR VON HEIZELEMENTEN AN BORD EINES FAHRZEUGS
METHOD FOR CONTROLLING THE TEMPERATURE OF HEATING ELEMENTS ON BOARD A VEHICLE

(30) Priorité: 09.07.2020 FR 2007295
(43) Date de publication de la demande: 12.01.2022
(73) Titulaire: Renault s.a.s, 92100 Boulogne Billancourt (FR)
(72) Inventeur: L'HUILLIER, Jean-Marie, 92130 ISSY LES MOULINEAUX (FR)
(74) Mandataire: Renault Group

(56) Documents cités:
- GB-A- 2 498 376
- JP-A- 2011 244 652
- JP-A- 2014 130 152
- US-A1- 2015 291 036
- US-A1- 2018 141 438

## Description

### Domaine technique

La présente invention concerne la régulation des éléments chauffants embarqués dans un véhicule à partir d'un calculateur central.

La présente invention vise notamment à décrire la mise-en-œuvre d'un procédé qui coordonne les puissances électriques soutirées par les éléments chauffants pour maximiser les puissances électriques individuellement disponibles.

### Techniques antérieures

On connaît des procédés de régulation de la consommation des éléments chauffants de confort embarqués à bord d'un véhicule (sièges chauffants, volant chauffant par exemple) qui permettent de prévenir la surconsommation de ces éléments par rapport à un plafond de consommation électrique défini à partir de la capacité du générateur de courant électrique (alternateur) du véhicule ou de la capacité de stockage électrique d'un accumulateur du véhicule.

Notamment, il est connu des procédés actuels pour réguler les soutirages des éléments chauffants d'utiliser une simple logique booléenne d'autorisation attribuée par une comparaison, pour chaque élément chauffant, de la puissance demandée à une puissance maximum allouée de manière fixe à chaque élément chauffant par le constructeur.

Ainsi, par soucis de prévention de toute panne de batterie, les éléments chauffants de confort embarqués sont tous plafonnés à une consommation maximale hypothétique correspondant à la consommation maximale qu'il y aurait si tous les éléments chauffants étaient utilisés simultanément avec une consigne maximale, divisée par le nombre desdits éléments chauffants embarqués.

Par exemple, pour un véhicule embarquant quatre sièges chauffants et pour lequel soixante ampères sont alloués à la fonction de chauffage de ces sièges, chaque siège pourra au maximum soutirer quinze ampères dans l'état actuel de la technique. US 2018/141438 A1, US 2015/291036 A1, et JP 2011 244652 A divulguent des procédés de régulation d'une pluralité d'éléments électriques chauffants embarqués dans un véhicule ayant un calculateur central ainsi qu'un calculateur autonome par élément électrique chauffant, comprenant la régulation de la température dudit élément chauffant, et une régulation de la consommation dudit élément chauffant; selon l'art de la technique.

En outre, certains éléments tels que les sièges chauffants sont souvent couplés à des moyens de commande de la consigne de confort souhaitée par l'utilisateur, qui comprend par exemple des consignes de vitesse de réchauffement : « léger », « moyen », « fort ».

Or, il est très rare que tous les utilisateurs utilisent simultanément la fonction de chauffage du siège.

Notamment, la vitesse « fort » est souvent jugée décevante pour sa lenteur, et, lorsque le conducteur est seul, il souhaiterait pouvoir augmenter la vitesse de réchauffement au-delà de la limitation.

De plus, si tous les utilisateurs utilisent simultanément la fonction de chauffage du siège, il est également rare qu'ils sollicitent tous la consigne de puissance maximale.

### Exposé de l'invention

L'invention a pour but de pallier au moins certains des inconvénients précités et de proposer un procédé de régulation capable de cumuler des avantages de modularité dynamique de l'allocation des puissances de soutirage des éléments chauffants en fonction de leurs utilisations effectives.

Au vu de ce qui précède, l'invention a pour objet un procédé de régulation d'une pluralité d'éléments électriques chauffants embarqués dans un véhicule ayant un calculateur central ainsi qu'un calculateur autonome par élément électrique chauffant, chaque calculateur autonome étant couplé au calculateur central et associé à un élément électrique chauffant, comprenant la régulation de la température dudit élément chauffant, une régulation de la consommation dudit élément chauffant en fonction d'une limitation de consommation électrique élémentaire dudit élément électrique chauffant utilisé envoyée par le calculateur central à chaque calculateurs autonomes en fonction d'une limitation de consommation électrique globale imposée au calculateur central et la génération d'une consigne de température limitation de consommation souhaitée pour l'utilisation d'un élément électrique, ladite limitation de consommation électrique élémentaire étant calculée unitairement et dynamiquement par le calculateur central en fonction de la consommation réelle de chaque élément électrique chauffant et en fonction de la somme des consommations de chaque élément électrique comparée à la limitation de consommation électrique globale imposée au calculateur central.

De préférence, le calcul dynamique de la limitation de consommation électrique élémentaire est effectué en parallèle de la régulation de l'élément chauffant utilisé.

La consommation électrique de chaque élément chauffant est limitée à la consommation élémentaire utilisée dès lors que la somme des courants de consommation associés à chaque consigne de confort souhaitée pour l'utilisation des deux éléments électriques chauffants dépasse la limitation de consommation électrique globale imposée au calculateur central, et ce indépendamment des consignes de confort souhaitée pour l'utilisation des éléments électriques chauffants.

La limitation de consommation électrique élémentaire dépend de la différence entre la limitation de consommation électrique globale imposée au calculateur central et la somme des courants associés à chaque consigne de confort souhaitée pour l'utilisation des éléments électriques chauffants.

Selon l'invention, la limitation de consommation électrique élémentaire calculée s'étend entre zéro et la limitation de consommation électrique globale imposée au calculateur central.

Les limitations de consommations électriques élémentaires de deux éléments électriques chauffants utilisés sont liées par une relation de proportionnalité dès lors que la somme des courants de consommation associés à chaque consigne de confort souhaitée pour l'utilisation des deux éléments électriques chauffants dépasse la limitation de consommation électrique globale imposée au calculateur central, et ce indépendamment des consignes de confort souhaitée pour l'utilisation des deux éléments électriques chauffants.

Avantageusement, la limitation de consommation électrique élémentaire est calculée dynamiquement indépendamment du nombre d'éléments électriques chauffants embarqués dans le véhicule.

La limitation de consommation électrique élémentaire peut être par exemple calculée dynamiquement en fonction d'une mesure de courant consommée par l'élément électrique chauffant utilisé. En outre, la valeur de la limitation électrique peut être calculée comme un écart « epsilon » positif additionné au courant consommé par l'élément électrique lorsque la limitation de consommation électrique globale imposée au calculateur central est inférieure à la somme des courants associés à chaque consigne de confort souhaitée pour l'utilisation des éléments électriques chauffants, cet écart devenant nul lorsque la limitation de consommation électrique globale imposée au calculateur central est supérieure ou égale à la somme des courants associés à chaque consigne de confort souhaitée pour l'utilisation des éléments électriques chauffants.

La régulation de la température d'un élément chauffant utilisé peut-être de type PID (Proportionnel, Intégral, Différentiel).

Le procédé peut comprendre en outre une étape de paramétrage de la limitation de consommation électrique globale imposée au calculateur central, effectuée par le calculateur central à partir du nombre d'éléments électriques chauffants utilisés simultanément.

De préférence, l'étape de paramétrage de la limitation de consommation électrique globale imposée au calculateur central est effectuée dès lors qu'un élément électrique chauffant embarqué devient un élément électrique chauffant utilisé ou dès lors qu'un élément électrique chauffant utilisé cesse d'être utilisé.

### Brève description des dessins

L'invention sera mieux comprise à l'étude détaillée du dessin annexé pris à titre d'exemple non limitatif, sur lequel :

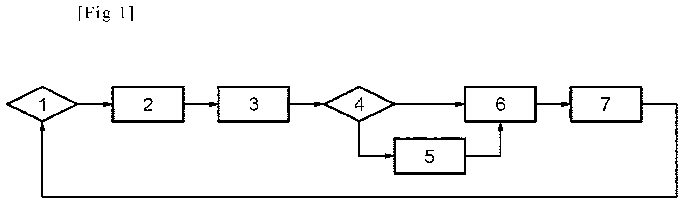

[Fig.1] détaille des étapes de la mise en œuvre d'un procédé de régulation de la température d'éléments chauffants embarqués dans un véhicule.

### Description détaillée

L'invention a pour objet un procédé de régulation d'une pluralité d'éléments électriques chauffants embarqués dans un véhicule.

Les éléments chauffants peuvent notamment consister en une pluralité de sièges intégrant une nappe chauffante, un volant chauffant, des accoudoirs chauffants...

Selon les systèmes de régulation connus, le véhicule embarque un superviseur (ou calculateur central) comprenant par exemple un microprocesseur, qui peut notamment être partiellement ou intégralement intégré au système de régulation de la climatisation.

Le calculateur central est couplé à une pluralité de calculateurs autonomes déportés (parfois appelés « ITCU ») qui sont chacun couplé à un élément électrique chauffant.

Chaque calculateur autonome est en outre couplé au calculateur central, par exemple par le biais d'un bus de communication automobile de type LIN, pour des échanges bilatéraux d'information de diagnostic, des consignes de confort souhaitée par l'utilisateur.

Les consignes de confort sont par exemple de la forme « température faible », « température moyenne » ou « température forte ». Elles sont ensuite traduites en consignes de température par l'ITCU. Des courants électriques ou des plages de courants sont associés à ces consignes de températures par le calculateur central.

Chaque calculateur autonome peut faire remonter au calculateur central la mesure de courant utilisée en temps réel par l'élément.

En outre, le calculateur central peut élaborer et envoyer une consigne de limitation de courant vers n'importe quel calculateur autonome pour l'asservir sur la consigne de confort souhaitée par l'utilisateur pour l'élément chauffant associé.

En se référant à la Figure 1, le procédé comprend une première étape 1 lors de laquelle le calculateur central est en surveillance de l'état des calculateurs autonomes de manière à détecter si un élément chauffant devient allumé ou éteint.

L'allumage correspond à la génération d'une consigne de confort souhaité pour l'élément chauffant, et l'extinction à l'arrêt d'une telle consigne.

La génération d'une consigne de confort souhaitée pour l'utilisation d'un élément électrique chauffant est par exemple réalisée par un utilisateur par l'activation de moyens de sélection couplés à l'élément chauffant, tels qu'une molette de sélection.

Si un événement d'allumage ou d'extinction d'un élément chauffant est détecté par le calculateur autonome couplé audit élément chauffant, il est relayé au calculateur central, et le procédé se poursuit par l'étape 2, sinon il reste à l'étape 1.

Lors de l'étape 2, le calculateur central peut effectuer un paramétrage de la limitation de consommation électrique globale imposée par rapport au niveau courant de charge d'un accumulateur électrique du véhicule.

La limitation de consommation électrique globale pour les éléments chauffants est par exemple fixée par le constructeur qui définit un plafond sécuritaire de consommation électrique à partir de la capacité du générateur de courant électrique (alternateur) du véhicule ou de la capacité de stockage électrique maximale d'une batterie du véhicule.

Par exemple, la limitation est fixée à soixante ampères alloués à la fonction de chauffage d'un îlot d'éléments chauffants, tels que les éléments de confort de l'habitacle, incluant les sièges et le volant. L'étape 2 se poursuit par l'étape 3.

Lors de l'étape 3, le calculateur central recueille chaque mesure de consommation. En outre, le calculateur central calcule la somme des mesures de consommation qui font suite aux appels de soutirage électrique associés aux éléments chauffants sollicités. L'étape 3 se poursuit par l'étape 4.

Lors de l'étape 4, le calculateur central calcule la différence entre la limitation de consommation électrique globale imposée au calculateur central (définie en étape 2) et la somme calculée lors de l'étape 3.

Si cette différence est positive, c'est-à-dire que la somme des appels de soutirage électrique associés à chaque consigne de confort souhaité pour une utilisation d'élément électrique chauffant ne dépasse pas la limitation globale préalablement définie, le procédé se poursuit par l'étape 5, sinon il se poursuit par l'étape 6.

Lors de l'étape 6, la limitation de consommation électrique élémentaire est, dans le procédé de l'invention et contrairement aux procédés connus de l'état de l'art, calculée dynamiquement par le calculateur central, en fonction de la mesure de consommation de chaque élément chauffant. Dans ce cas, aucun élément chauffant n'est limité en consommation.

Une consigne nulle ou l'absence de consigne reçue pour un élément chauffant indique au calculateur central que cet élément n'est pas utilisé et donc que sa puissance allouée peut être redistribuée au bénéfice des soutirages effectifs.

Le calcul dynamique de la limitation de consommation électrique élémentaire peut être effectué en parallèle de la régulation en courant consommé (c'est-à-dire en température) de l'élément chauffant utilisé.

Ainsi, la limitation de consommation électrique élémentaire est calculée comme la différence entre la limitation de consommation électrique globale imposée au calculateur central et la somme des courants mesurés utilisés par chaque éléments chauffants. Ce courant varie au cours du temps (il est en général élevé lorsque le siège est froid, et il décroit en fonction de l'atteinte de la consigne de confort paramétrée ; lorsque la température du siège (par exemple) est égale à celle de la consigne de confort souhaitée, le courant circulant dans la nappe chauffante du siège correspond au courant de maintien de la température, celui-ci étant beaucoup plus faible que celui nécessitant la mise en chauffe du siège lorsqu'il est froid. Le courant varie également en fonction de la consigne de confort que l'utilisateur choisit (faible, moyen ; fort)).

La limitation de consommation électrique élémentaire calculée s'étend par exemple entre zéro et la limitation de consommation électrique globale imposée au calculateur central, par exemple entre zéro et soixante ampères dans l'exemple précédant (cas où un seul élément chauffant est activé par l'utilisateur).

Ainsi, la puissance que peut soutirer chaque siège peut être augmentée jusqu'à ladite limitation de consommation globale, dans la limite de la simultanéité des régulations des autres éléments chauffants.

L'étape 6 mène à l'étape 7 de régulation de la température de l'au moins un élément chauffant émetteur d'une consigne d'utilisation, par l'émission en retour d'une consigne de confort par le calculateur central vers le calculateur autonome associé pour l'asservir en température en fonction de la limitation de consommation électrique globale imposée au calculateur central et en fonction d'une limitation de consommation électrique élémentaire dudit élément électrique chauffant utilisé. L'étape 7 renvoie à l'étape 1.

Lors de l'étape 5, les limitations s'appliquent de manière répartie pour un nombre d'éléments électriques chauffants supérieur ou égal à deux.

Par exemple, les limitations de consommations électriques élémentaires de deux éléments électriques chauffants utilisés sont liées par une relation de proportionnalité dès lors qu'un nouvel élément électrique est activé. Il s'agit d'une initialisation de chaque élément électrique activé, qui se produit à chaque fois qu'un nouvel élément est activé ou bien désactivé.

Ces limitations sont alors réalisées indépendamment des consignes de confort souhaité pour l'utilisation des deux éléments électriques chauffants.

Par « proportionnalité », on entend par exemple une relation d'égalité ou de simple au double ou autre relation proportionnelle.

Par exemple, dans le cas de quatre sièges qui appellent par leurs consignes une puissance totale supérieure à la limitation globale admissible, le calculateur central distribue de façon équitable les soutirages à chaque élément chauffant, chacun soutirant alors par exemple à la même valeur. Si un siège demande moins de courant que l'attribution initiale équitable calculée par le calculateur central (car le siège est déjà suffisamment chaud) le calcul dynamique redonnera automatiquement le courant potentiel restant aux autres sièges.

Autrement, des pondérations des consignes de régulations peuvent être programmées dans le calculateur central pour privilégier certains éléments chauffants : un soutirage double ou bien plus important peut être automatiquement attribué à un siège avant par rapport à un siège arrière par exemple, toujours sans dépassement de la puissance globale maximale admissible.

La limitation de consommation électrique élémentaire est calculée dynamiquement lors de l'étape 7, indépendamment du nombre d'éléments électriques chauffants embarqués dans le véhicule, contrairement au procédé de régulation de l'art antérieur, mais en fonction du nombre d'éléments chauffants effectivement actifs.

Le procédé peut donc comporter l'étape 2 de paramétrage de la limitation de consommation électrique globale imposée au calculateur central, effectuée par le calculateur central à partir du nombre d'éléments électriques chauffants effectivement utilisés simultanément.

Avantageusement, la limitation de consommation électrique élémentaire est calculée dynamiquement en fonction d'une mesure de courant consommé par l'élément électrique chauffant utilisé.

Les remontées d'informations depuis les calculateurs autonomes telles que les consommations de courant ne sont habituellement pas utilisées pour réguler les éléments chauffant en retour.

Le calcul de la consommation permet d'ajuster le courant dans le composant quelle que soit la consigne de confort souhaité par l'utilisateur.

Dans un certain mode de réalisation, l'ajustement du calcul dynamique de la limitation de courant d'un élément chauffant utilisé peut-être réalisée par un régulateur de type PID (Proportionnel, Intégral, Différentiel) d'après l'évolution de sa consommation de courant. On obtient ainsi une régulation particulièrement rapide et stable, chaque régulateur PID par exemple dans le calculateur central mesurant la différence entre une éventuelle consigne d'écart marge arbitraire proche de zéro et la différence entre la limitation en cours et le courant consommé en ajoutant. Cette consigne d'écart de limitation est mise à zéro dès lors que la somme des courants utilisés par chaque élément électrique est supérieure à la limitation globale imposée au calculateur central.

L'étape de paramétrage de la limitation de consommation électrique globale imposée au calculateur central est par exemple effectuée dès lors qu'un élément électrique chauffant embarqué devient un élément électrique chauffant utilisé ou dès lors qu'un élément électrique chauffant utilisé cesse d'être utilisé.

Par exemple, dès qu'un siège chauffant est allumé ou éteint, le calculateur central réitère son attribution des limitations de soutirage maximum disponibles pour chaque élément chauffant actif, au moyen d'une fonction de réinitialisation qui calcule une nouvelle intégrale de la régulation PID.

On obtient ainsi un procédé de régulation qui, à chaque fois qu'un élément chauffant est activé ou désactivé, réattribue automatiquement les limitations de courant pour chaque élément utilisé grâce à une régulation de type PID permettant un asservissement particulièrement rapide et fiable pour chaque composant afin d'assurer à la fois une possibilité de soutirage d'une puissance électrique maximale particulièrement importante de chaque élément chauffant notamment utilisé seul tout en assurant une consommation de courant totale qui soit toujours en dessous de la limitation globale admissible compte-tenu des éléments électriques chauffants utilisés.

## Revendications

1. Procédé de régulation d'une pluralité d'éléments électriques chauffants embarqués dans un véhicule ayant un calculateur central ainsi qu'un calculateur autonome par élément électrique chauffant, chaque calculateur autonome étant couplé au calculateur central et associé à un élément électrique chauffant, comprenant la régulation de la température dudit élément chauffant, une régulation de la consommation dudit élément chauffant en fonction d'une limitation de consommation électrique élémentaire dudit élément électrique chauffant utilisé envoyée par le calculateur central à chaque calculateur autonome, ladite limitation de consommation électrique élémentaire étant calculée unitairement et dynamiquement par le calculateur central en fonction de la consommation réelle de chaque élément électrique chauffant et en fonction de la somme des consommations de chaque élément électrique comparée à une limitation de consommation électrique globale pour les éléments chauffants imposée au calculateur central, **caractérisé en ce qu'** un utilisateur réalise la génération d'une consigne de confort souhaitée par l'utilisateur pour l'utilisation d'au moins deux des éléments électriques chauffants et **en ce que** la consommation électrique de chaque élément chauffant est limitée à la consommation élémentaire utilisée dès lors que la somme des courants de consommation associés à chaque consigne de confort souhaitée pour l'utilisation des deux éléments électriques chauffants dépasse la limitation de consommation électrique globale pour les éléments chauffants imposée au calculateur central, et ce indépendamment des consignes de confort souhaitée pour l'utilisation des éléments électriques chauffants, dans lequel la limitation de consommation électrique élémentaire calculée s'étend entre zéro et la limitation de consommation électrique globale imposée au calculateur central, dans lequel la limitation de consommation électrique élémentaire dépend de la différence entre la limitation de consommation électrique globale imposée au calculateur central et la somme des courants associés à chaque consigne de confort souhaité pour l'utilisation des éléments électriques chauffants, où les limitations de consommations électriques élémentaires de deux éléments électriques chauffants utilisés sont liées par une relation de proportionnalité dès lors que la somme des courants de consommation associés à chaque consigne de confort souhaitée pour l'utilisation des deux éléments électriques chauffants dépasse la limitation de consommation électrique globale imposée au calculateur central, et ce indépendamment des consignes de confort souhaitée pour l'utilisation des deux éléments électriques chauffants.

2. Procédé selon la revendication 1, dans lequel le calcul dynamique de la limitation de consommation électrique élémentaire est effectué en parallèle de la régulation de l'élément chauffant utilisé.

3. Procédé selon l'une quelconque des revendications précédentes, dans lequel la limitation de consommation électrique élémentaire est calculée dynamiquement indépendamment du nombre d'éléments électriques chauffants embarqués dans le véhicule.

4. Procédé selon l'une quelconque des revendications précédentes, dans lequel la limitation de consommation électrique élémentaire est calculée dynamiquement en fonction d'une mesure de courant consommée par l'élément électrique chauffant utilisé.

5. Procédé selon l'une quelconque des revendications précédentes, dans lequel la limitation électrique élémentaire est calculée avec un écart additionné au courant consommé par l'élément électrique lorsque la limitation de consommation électrique globale imposée au calculateur central est inférieure à la somme des courants associés à chaque consigne de confort souhaitée pour l'utilisation des éléments électriques chauffants, cet écart devenant nul lorsque la limitation de consommation électrique globale imposée au calculateur central est supérieure ou égale à la somme des courants de consommation associés à chaque consigne de confort souhaitée pour l'utilisation des éléments électriques chauffants.

6. Procédé selon l'une quelconque des revendications précédentes, dans lequel une régulation dynamique de la valeur de la limitation de courant pour chaque élément chauffant utilisé est de type PID (Proportionnel, Intégral, Différentiel).

7. Procédé selon l'une quelconque des revendications précédentes, comportant une étape de paramétrage de la limitation de consommation électrique globale imposée au calculateur central, effectuée par le calculateur central à partir du nombre d'éléments électriques chauffants utilisés simultanément.

8. Procédé selon la revendication 7, dans lequel l'étape de paramétrage de la limitation de consommation électrique globale imposée au calculateur central est effectuée dès lors qu'un élément électrique chauffant embarqué devient un élément électrique chauffant utilisé ou dès lors qu'un élément électrique chauffant utilisé cesse d'être utilisé.

## Patentansprüche

1. Verfahren zur Regulierung einer Mehrzahl von elektrischen Heizelementen, die in ein Fahrzeug eingebaut sind, das einen zentralen Rechner sowie einen autonomen Rechner je elektrisches Heizelement hat, wobei jeder autonome Rechner an den zentralen Rechner gekoppelt ist und einem elektrischen Heizelement zugeordnet ist, umfassend die Regulierung der Temperatur des Heizelements, eine Regulierung des Verbrauchs des Heizelements in Abhängigkeit von einer Begrenzung des elementaren elektrischen Verbrauchs des verwendeten elektrischen Heizelements, die von dem zentralen Rechner an jeden autonomen Rechner gesendet wird, wobei die Begrenzung des elementaren elektrischen Verbrauchs von dem zentralen Rechner einheitlich und dynamisch in Abhängigkeit von dem tatsächlichen Verbrauch jedes elektrischen Heizelements und in Abhängigkeit von der Summe der Verbräuche jedes elektrischen Elements verglichen mit einer dem zentralen Rechner vorgegebenen Begrenzung des globalen elektrischen Verbrauchs für die Heizelemente berechnet wird, **dadurch gekennzeichnet, dass** ein Verwender die Erzeugung eines von dem Verwender für die Verwendung von mindestens zwei der elektrischen Heizelemente gewünschten Komfortsollwerts ausführt und dass der elektrische Verbrauch jedes Heizelements auf den verwendeten elementaren Verbrauch begrenzt wird, sobald die Summe der Verbrauchsströme, die jedem für die Verwendung der beiden elektrischen Heizelemente gewünschten Komfortsollwert zugeordnet sind, die dem zentralen Rechner vorgegebene Begrenzung des globalen elektrischen Verbrauchs für die Heizelemente überschreitet, und dies unabhängig von den für die Verwendung der elektrischen Heizelemente gewünschten Komfortsollwerten, wobei sich die berechnete Begrenzung des elementaren elektrischen Verbrauchs zwischen null und der dem zentralen Rechner vorgegebenen Begrenzung des globalen elektrischen Verbrauchs erstreckt, wobei die Begrenzung des elementaren elektrischen Verbrauchs von der Differenz zwischen der dem zentralen Rechner vorgegebenen Begrenzung des globalen elektrischen Verbrauchs und der Summe der Ströme, die jedem für die Verwendung der elektrischen Heizelemente gewünschten Komfortsollwert zugeordnet sind, abhängt, wobei die Begrenzungen der elementaren elektrischen Verbräuche von zwei verwendeten elektrischen Heizelementen durch eine Proportionalitätsbeziehung verknüpft sind, sobald die Summe der Verbrauchsströme, die jedem für die Verwendung der beiden elektrischen Heizelemente gewünschten Komfortsollwert zugeordnet sind, die dem zentralen Rechner vorgegebene Begrenzung des globalen elektrischen Verbrauchs überschreitet, und dies unabhängig von den für die Verwendung der beiden elektrischen Heizelemente gewünschten Komfortsollwerten.

2. Verfahren nach Anspruch 1, wobei die dynamische Berechnung der Begrenzung des elementaren elektrischen Verbrauchs parallel zu der Regulierung des verwendeten Heizelements erfolgt.

3. Verfahren nach einem der vorhergehenden Ansprüche, wobei die Begrenzung des elementaren elektrischen Verbrauchs unabhängig von der Anzahl von elektrischen Heizelementen, die in das Fahrzeug eingebaut sind, dynamisch berechnet wird.

4. Verfahren nach einem der vorhergehenden Ansprüche, wobei die Begrenzung des elementaren elektrischen Verbrauchs in Abhängigkeit einer Messung des Stromverbrauchs durch das verwendete elektrische Heizelement dynamisch berechnet wird.

5. Verfahren nach einem der vorhergehenden Ansprüche, wobei die elementare elektrische Begrenzung mit einer zu dem von dem elektrischen Element verbrauchten Strom addierten Abweichung berechnet wird, wenn die dem zentralen Rechner vorgegebene Begrenzung des globalen elektrischen Verbrauchs geringer als die Summe der Ströme ist, die jedem für die Verwendung der elektrischen Heizelemente gewünschten Komfortsollwert zugeordnet sind, wobei diese Abweichung null wird, wenn die dem zentralen Rechner vorgegebene Begrenzung des globalen elektrischen Verbrauchs größer oder gleich der Summe der Verbrauchsströme ist, die jedem für die Verwendung der elektrischen Heizelemente gewünschten Komfortsollwert zugeordnet sind.

6. Verfahren nach einem der vorhergehenden Ansprüche, wobei eine dynamische Regulierung des Werts der Strombegrenzung für jedes verwendete Heizelement vom Typ PID (Proportional, Integral, Differential) ist.

7. Verfahren nach einem der vorhergehenden Ansprüche, umfassend einen Schritt des Parametrierens der dem zentralen Rechner vorgegebenen Begrenzung des globalen elektrischen Verbrauchs, der von dem zentralen Rechner ausgehend von der Anzahl von gleichzeitig verwendeten elektrischen Heizelementen durchgeführt wird.

8. Verfahren nach Anspruch 7, wobei der Schritt des Parametrierens der dem zentralen Rechner vorgegebenen Begrenzung des globalen elektrischen Verbrauchs durchgeführt wird, sobald ein eingebautes elektrisches Heizelement ein verwendetes elektrisches Heizelement wird oder sobald ein verwendetes elektrisches Heizelement nicht mehr verwendet wird.

## Claims

1. Method for controlling a plurality of electric heating elements on board a vehicle having a central computer and an autonomous computer per electric heating element, each autonomous computer being coupled to the central computer and associated with an electric heating element, comprising controlling the temperature of said heating element, controlling the consumption of said heating element on the basis of an elementary power consumption limitation of said electric heating element used sent by the central computer to each autonomous computer, said elementary power consumption limitation being calculated unitarily and dynamically by the central computer on the basis of the actual consumption of each electric heating element and on the basis of the sum of the consumptions of each electric element compared with an overall power consumption limitation for the heating elements that is imposed on the central computer, **characterized in that** a user generates a comfort setpoint desired by the user for the use of at least two of the electric heating elements and **in that** the power consumption of each heating element is limited to the elementary consumption used as soon as the sum of the consumption currents associated with each desired comfort setpoint for the use of the two electric heating elements exceeds the overall power consumption limitation for the heating elements that is imposed on the central computer, and this independently of the desired comfort setpoints for the use of the electric heating elements, wherein the calculated elementary power consumption limitation extends between zero and the overall power consumption limitation imposed on the central computer, wherein the elementary power consumption limitation depends on the difference between the overall power consumption limitation imposed on the central computer and the sum of the currents associated with each desired comfort setpoint for the use of the electric heating elements, where the elementary power consumption limitations of two electric heating elements used are linked by a relationship of proportionality as soon as the sum of the consumption currents associated with each desired comfort setpoint for the use of the two electric heating elements exceeds the overall power consumption limitation imposed on the central computer, and this independently of the desired comfort setpoints for the use of the two electric heating elements.

2. Method according to Claim 1, wherein the dynamic calculation of the elementary power consumption limitation is carried out in parallel with the control of the heating element used.

3. Method according to either one of the preceding claims, wherein the elementary power consumption limitation is calculated dynamically independently of the number of electric heating elements on board the vehicle.

4. Method according to any one of the preceding claims, wherein the elementary power consumption limitation is calculated dynamically on the basis of a measurement of current consumed by the electric heating element used.

5. Method according to any one of the preceding claims, wherein the elementary power limitation is calculated with a difference added to the current consumed by the electric element when the overall power consumption limitation imposed on the central computer is less than the sum of the currents associated with each desired comfort setpoint for the use of the electric heating elements, this difference becoming zero when the overall power consumption limitation imposed on the central computer is greater than or equal to the sum of the consumption currents associated with each desired comfort setpoint for the use of the electric heating elements.

6. Method according to any one of the preceding claims, wherein dynamic control of the value of the current limitation for each heating element used is of PID (Proportional, Integral, Differential) type.

7. Method according to any one of the preceding claims, comprising a step of configuring the overall power consumption limitation imposed on the central computer, carried out by the central computer on the basis of the number of electric heating elements used simultaneously.

8. Method according to Claim 7, wherein the step of configuring the overall power consumption limitation imposed on the central computer is carried out as soon as an on-board electric heating element becomes a used electric heating element or as soon as a used electric heating element ceases to be used.
